# EUROPEAN PATENT APPLICATION

(11) **EP 4 625 869 A1**
(43) Date of publication of application: **01.10.2025**
(21) Application number: 25166424.9
(22) Date of filing: 26.03.2025
(51) Int. Cl.: H04L 5/00, H04B 7/08, H04W 52/02, H04W 76/27

(54) **METHOD, APPARATUS AND COMPUTER PROGRAM**

(30) Priority: 28.03.2024 GB 202404523
(71) Applicant: Nokia Technologies Oy, 02610 Espoo (FI)
(72) Inventor: KNUDSEN, Knud, 9440 Aabybro (DK); VENKATRAMAN, Ganesh, 90540 Oulu (FI); KAIKKONEN, Jorma Johannes, 90800 Oulu (FI); HVIID, Jan Torst, 9270 Klarup (DK)
(74) Representative: Script Intellectual Property LLP

(57) **Abstract**

According to some examples there is provided an apparatus for a user equipment, the apparatus comprising means for: obtaining, from a network access node, a low power synchronisation signal corresponding to a first beam and one or more beam tracking signals corresponding to one or more other beams, wherein the low power synchronisation signal is associated with the one or more beam tracking signals; estimating, based on the obtained low power synchronisation signal and the one or more beam tracking signals, respective receive powers and/or receive qualities associated with the first beam and the one or more other beams; selecting a beam from the first beam and the one or more other beams based on the estimated respective receive powers and/or receive qualities.

## Description

### FIELD

The present application relates to performing beam selection at a user equipment.

### BACKGROUND

A communication system can be seen as a facility that enables communication sessions between two or more entities such as user terminals, base stations and/or other nodes by providing carriers between the various entities involved in the communications session. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (Universal Mobile Telecommunications Service terrestrial radio access network (e.g., 3G radio)). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP).

### SUMMARY

According to a first aspect, there is provided an apparatus for a user equipment, the apparatus comprising means for: obtaining, from a network access node, a low power synchronisation signal corresponding to a first beam and one or more beam tracking signals corresponding to one or more other beams, wherein the low power synchronisation signal is associated with the one or more beam tracking signals; estimating, based on the obtained low power synchronisation signal and the one or more beam tracking signals, respective receive powers and/or receive qualities associated with the first beam and the one or more other beams; selecting a beam from the first beam and the one or more other beams based on the estimated respective receive powers and/or receive qualities.

The apparatus may further comprise means for at least one of: performing, on the selected beam, at least one of receiver gain control, radio resource management measurement, and timing tracking to the network access node; and providing an indication of the selected beam to the network access node.

The means for selecting a beam may comprise means for selecting the beam that corresponds to the highest receive power of the respective receive powers or corresponds to the highest receive quality of the respective receive qualities.

The means for selecting the beam may comprise means for: determining respective signal to noise ratio for each of the one or more other beams; and averaging the receive powers across a set of beam tracking signal receptions of a respective other beam when the respective signal to noise ratio for the respective other beam is below a threshold.

The selecting the beam may comprise selecting the beam from the first beam and the one or more other beams based on a relative power estimation.

The apparatus may comprise a low power radio mode and a main radio mode, and further comprises means for performing: using the low power synchronisation signal and the beam tracking signals for assisting a transition from the low power radio mode to the main radio mode.

The selecting may comprise selecting a synchronisation signal block index based on the estimated receive powers and/or receive qualities of the low power synchronisation signal and the beam tracking signals; and wherein the apparatus may further comprise means for: switching to the beam associated with the selected synchronisation signal block index in the main radio mode.

The apparatus may further comprise means for determining the beam tracking signals from a time domain representation of the low power synchronisation signal, wherein beam tracking signal corresponding to each beam is comprised in a respective on-segment of an on-off keying pattern.

The apparatus may further comprise means for determining the beam tracking signal from a frequency domain representation of the low power synchronisation signal, wherein beam tracking signal corresponding to each beam is further comprised in a same frequency range of different on-segments of the on-off keying pattern.

The apparatus may further comprise means for determining the beam tracking signals from a frequency domain representation of the low power synchronisation signal, wherein beam tracking signal corresponding to each beam is comprised in a respective frequency range.

The apparatus may further comprise means for determining the beam tracking signals at border frequency carrier of the frequency domain representation of the low power synchronisation signal, or determining the beam tracking signals at multiple frequency carriers of the frequency domain representation of the low power synchronisation signal, wherein the multiple frequency carriers occupy a same symbol.

According to a second aspect there is provided an apparatus for a network access node, the apparatus comprising means for: providing, to a user equipment, a low power synchronisation signal corresponding to a first beam; and providing, to the user equipment, one or more beam tracking signals corresponding to one or more other beams, wherein the low power synchronisation signal is associated with the one or more beam tracking signals.

The apparatus may further comprise means for: receiving, from the user equipment, an indication of a selected beam of the first beam and the one or more other beams.

The apparatus may further comprise means for forming the beam tracking signals from a time domain representation of the low power synchronisation signal, wherein beam tracking signal corresponding to each beam is comprised in a respective on-segment of an on-off keying pattern.

The beam tracking signal corresponding to each beam may be further comprised in a same frequency range of different on-segments of the on-off keying pattern.

The apparatus may further comprise means for forming the beam tracking signals from a frequency domain representation of the low power synchronisation signal, wherein beam tracking signal corresponding to each beam is comprised in a respective frequency range.

According to a third aspect, there is provided an apparatus for a user equipment, the apparatus comprising at least one processor and at least one memory storing instructions that, when executed by the at least one processor, cause the apparatus at least to: obtain, from a network access node, a low power synchronisation signal corresponding to a first beam and one or more beam tracking signals corresponding to one or more other beams, wherein the low power synchronisation signal is associated with the one or more beam tracking signals; estimate, based on the obtained low power synchronisation signal and the one or more beam tracking signals, respective receive powers and/or receive qualities associated with the first beam and the one or more other beams; select a beam from the first beam and the one or more other beams based on the estimated respective receive powers and/or receive qualities.

The at least one processor may be configured to cause the apparatus to at least one of: perform, on the selected beam, at least one of receiver gain control, radio resource management measurement, and timing tracking to the network access node; and provide an indication of the selected beam to the network access node.

The at least one processor may be configured to cause the apparatus to select the beam that corresponds to the highest receive power of the respective receive powers or corresponds to the highest receive quality of the respective receive qualities.

The at least one processor may be configured to cause the apparatus to: determine respective signal to noise ratio for each of the one or more other beams; and average the receive powers across a set of beam tracking signal receptions of a respective other beam when the respective signal to noise ratio for the respective other beam is below a threshold.

The at least one processor may be configured to cause the apparatus to select the beam from the first beam and the one or more other beams based on a relative power estimation.

The apparatus may comprise a low power radio mode and a main radio mode, and the at least one processor may be configured to cause the apparatus to perform: using the low power synchronisation signal and the beam tracking signals for assisting a transition from the low power radio mode to the main radio mode.

The at least one processor may be configured to cause the apparatus to select a synchronisation signal block index based on the estimated receive powers and/or receive qualities of the low power synchronisation signal and the beam tracking signals; and wherein the at least one processor may be configured to cause the apparatus to: switch to the beam associated with the selected synchronisation signal block index in the main radio mode.

The at least one processor may be configured to cause the apparatus to determine the beam tracking signals from a time domain representation of the low power synchronisation signal, wherein beam tracking signal corresponding to each beam is comprised in a respective on-segment of an on-off keying pattern.

The at least one processor may be configured to cause the apparatus to determine the beam tracking signal from a frequency domain representation of the low power synchronisation signal, wherein beam tracking signal corresponding to each beam is further comprised in a same frequency range of different on-segments of the on-off keying pattern.

The at least one processor may be configured to cause the apparatus to determine the beam tracking signals from a frequency domain representation of the low power synchronisation signal, wherein beam tracking signal corresponding to each beam is comprised in a respective frequency range.

The at least one processor may be configured to cause the apparatus to determine the beam tracking signals at border frequency carrier of the frequency domain representation of the low power synchronisation signal, or determine the beam tracking signals at multiple frequency carriers of the frequency domain representation of the low power synchronisation signal, wherein the multiple frequency carriers occupy a same symbol.

According to a fourth aspect there is provided an apparatus for a network access node, the apparatus comprising at least one processor and at least one memory storing instructions that, when executed by the at least one processor, cause the apparatus at least to: provide, to a user equipment, a low power synchronisation signal corresponding to a first beam; and provide, to the user equipment, one or more beam tracking signals corresponding to one or more other beams, wherein the low power synchronisation signal is associated with the one or more beam tracking signals.

The at least one processor may be configured to cause the apparatus to: receive, from the user equipment, an indication of a selected beam of the first beam and the one or more other beams.

The at least one processor may be configured to cause the apparatus to form the beam tracking signals from a time domain representation of the low power synchronisation signal, wherein beam tracking signal corresponding to each beam is comprised in a respective on-segment of an on-off keying pattern.

The beam tracking signal corresponding to each beam may be further comprised in a same frequency range of different on-segments of the on-off keying pattern.

The at least one processor may be configured to cause the apparatus to form the beam tracking signals from a frequency domain representation of the low power synchronisation signal, wherein beam tracking signal corresponding to each beam is comprised in a respective frequency range.

According to a fifth aspect, there is provided a method performed by a user equipment, the method comprising: obtaining, from a network access node, a low power synchronisation signal corresponding to a first beam and one or more beam tracking signals corresponding to one or more other beams, wherein the low power synchronisation signal is associated with the one or more beam tracking signals; estimating, based on the obtained low power synchronisation signal and the one or more beam tracking signals, respective receive powers and/or receive qualities associated with the first beam and the one or more other beams; selecting a beam from the first beam and the one or more other beams based on the estimated respective receive powers and/or receive qualities.

The method may comprise steps corresponding to steps performed by the means or processor set out above.

According to a sixth aspect there is provided a method performed by a network access node, the method comprising: providing, to a user equipment, a low power synchronisation signal corresponding to a first beam; and providing, to the user equipment, one or more beam tracking signals corresponding to one or more other beams, wherein the low power synchronisation signal is associated with the one or more beam tracking signals.

The method may comprise steps corresponding to steps performed by the means or processor set out above.

According to a seventh aspect, there is provided a computer readable medium comprising instructions which, when executed by an apparatus for a user equipment, cause the apparatus to perform at least the following: obtaining, from a network access node, a low power synchronisation signal corresponding to a first beam and one or more beam tracking signals corresponding to one or more other beams, wherein the low power synchronisation signal is associated with the one or more beam tracking signals; estimating, based on the obtained low power synchronisation signal and the one or more beam tracking signals, respective receive powers and/or receive qualities associated with the first beam and the one or more other beams; selecting a beam from the first beam and the one or more other beams based on the estimated respective receive powers and/or receive qualities.

The computer readable medium may comprise instructions which, when executed by the apparatus for the user equipment, cause the apparatus to perform the method steps set out above.

According to an eighth aspect, there is provided a computer readable medium comprising instructions which, when executed by an apparatus for a network access node, cause the apparatus to perform at least the following: providing, to a user equipment, a low power synchronisation signal corresponding to a first beam; and providing, to the user equipment, one or more beam tracking signals corresponding to one or more other beams, wherein the low power synchronisation signal is associated with the one or more beam tracking signals.

The computer readable medium may comprise instructions which, when executed by the apparatus for the network access node, cause the apparatus to perform the method steps set out above.

The network access node of any of the preceding aspects may comprise at least one of an eNB, gNB and/or NodeB.

The low power synchronisation signal and the beam tracking signals of any of the preceding aspects may be modulated onto a waveform having alternating on-off keying segments.

Said waveform may comprise an on-off-keying 1 form and/or an on-off keying 4 form.

There may be an on-off transition within at least two symbols of the low power synchronisation signal and/or the beam tracking signals of any of the preceding aspects, based on a Manchester encoding scheme.

According to an aspect, there is provided a non-transitory computer readable medium comprising program instructions that, when executed by an apparatus, cause the apparatus to perform at least the method according to any of the preceding aspects.

In the above, many different embodiments have been described. It should be appreciated that further embodiments may be provided by the combination of any two or more of the embodiments described above.

### DESCRIPTION OF FIGURES

Embodiments will now be described, by way of example only, with reference to the accompanying Figures in which:
Figure 1 shows a representation of a network system according to some example embodiments;
Figure 2 shows a representation of a control apparatus according to some example embodiments;
Figure 3 shows a representation of an apparatus according to some example embodiments;
Figure 4 shows an example of a user equipment moving within a coverage area provided by a network access node;
Figure 5 shows an example periodicity of low power synchronization signal bursts;
Figure 6 shows an example where beam tracking signals are acquired from a time domain representation of a low power synchronization signal;
Figures 7 and 8 show examples where beam power is detected in the frequency domain;
Figure 9a shows a method according to some examples; and
Figure 9b shows another method according to some examples.

### DETAILED DESCRIPTION

The following describes methods that may be performed in relation to wake-up signals.

In more detail, the following describes methods for forming and using a wake-up signal corresponding to a first beam that comprises, or otherwise indicates, beam tracking information relating to one or more other beams. The beam tracking information and the wake-up signal may be transmitted by a same network access node. The beam tracking information may be transmitted by different beams of the network access node, while the remainder of the wake-up signal is transmitted by the first beam. Stated differently, during a transmission opportunity allocated for a wake-up signal corresponding to a first beam, transmissions (e.g., beam tracking information-based transmissions) are made by other beams. The transmissions made by other beams may be time and/or frequency multiplexed within the wake-up signal transmission opportunity.

A receiving user equipment (UE) may receive the wake-up signal corresponding to the first beam and determine relative qualities and/or powers of the one or more other beams based on the beam tracking information comprised therein. This may be used by the user equipment for selecting a beam corresponding to the best receive properties (e.g., the highest power and/or quality relative to the other beams). An indication identifying the selected beam may be transmitted back to the network access node. The network access node may use this indicated selected beam for determining whether to transmit a wake-up signal to the UE using the indicated selected beam (e.g., to replace the "first beam" with the "selected beam"). When the network access node determines to transmit to the UE using the selected beam, the network access node performs transmissions using the selected beam.

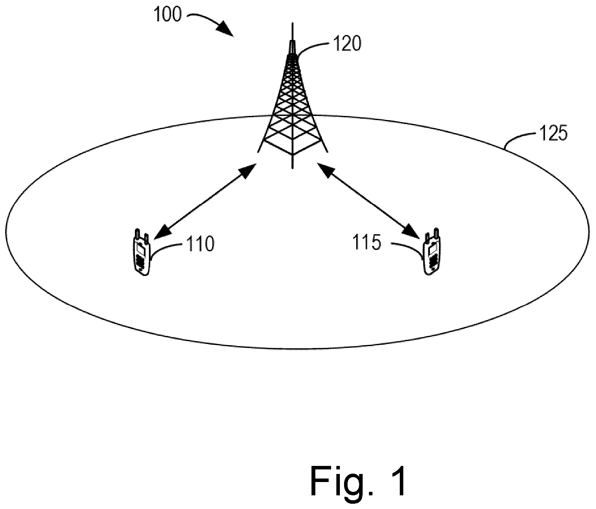

Figure 1 illustrates an example communication environment in which example embodiments of the present disclosure can be implemented. It is understood that this is merely used to illustrate an example communication environment, and that the presently described techniques may be used in other communication environment configurations.

Figure 1 shows an example communication environment 100 in which example embodiments of the present disclosure can be implemented.

In the communication environment 100, a plurality of communication devices, comprising user devices 110 and 115 (also referred to herein as a "terminal" or "terminal device") and a network device 120 (also referred to herein as a "network access node"), can communicate with each other. The network device 120 may serve a coverage area, called a cell 125. The user device 110 may have access to a communication network via the cell 125. In some example embodiments, both the user device 110 and the network device 120 may be configured to implement a beamforming technique and communicate with each other via a plurality of beams.

The term "terminal device" refers to any end device that may be capable of wireless communication. By way of example rather than limitation, a terminal device may also be referred to as a communication device, user equipment (UE), a Subscriber Station (SS), a Portable Subscriber Station, a mobile device, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), a machine-type communications (MTC) device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user device", "user equipment" and "UE" may be used interchangeably.

As used herein, the term "network device" is used interchangeably with "network access node", and refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

In some examples, a link from the network device 120 to the user device 110 or 115 is referred to as a DL, while a link from the user device 110 or 115 to the network device 120 is referred to as a UL. Links are also referred to herein as "channels". In DL, the network device 120 is a Tx device (or a transmitter), and the user device 110 or 115 is a Rx device (or a receiver). In UL, the user device 110 or 115 is a Tx device (or a transmitter), and the network device 120 is a Rx device (or a receiver). A link between the user device 110 and another user device (not shown) is referred to as a sidelink (SL). In SL, one of the user devices is a Tx device (or a transmitter), and the other of the user devices is a Rx device (or a receiver).

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

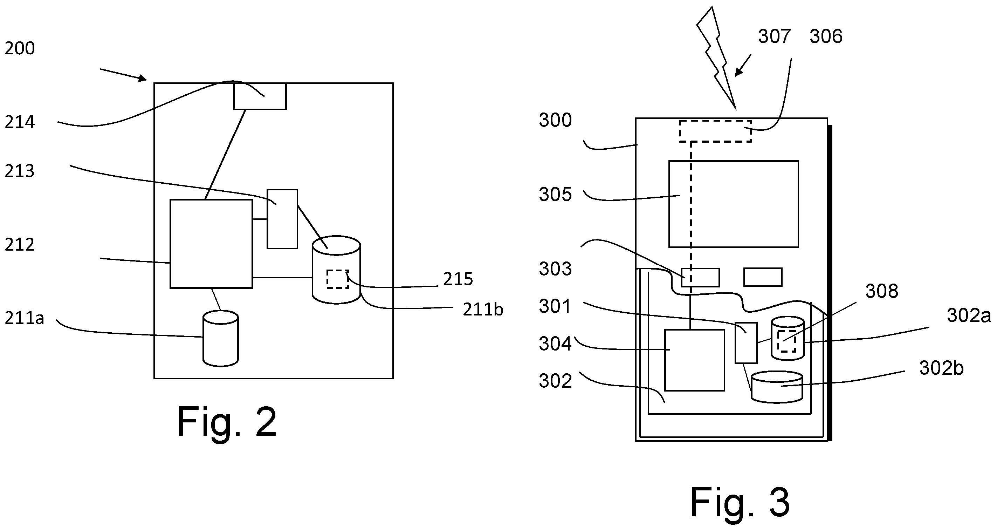

Figure 2 illustrates an example of a control apparatus 200 for causing a network device 120 (such as the network device described in Figure 1) to perform its operations. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the network device. In some embodiments, each function of the network device comprises a control apparatus 200. In some exemplary embodiments, the apparatus 200 may be implemented at the network device 120 or may be the network device 120.

Figure 3 illustrates an example of a terminal 300, such as the user device 110, 115 illustrated on Figure 1. The terminal 300 may be provided by any device capable of sending and receiving radio signals, such as the user device described herein. The terminal 300 may provide, for example, communication of data for carrying communications. The communications may be one or more of voice, electronic mail (email), text message, multimedia, data, machine data and so on.

The terminal 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The terminal 300 may be provided with at least one processor 301, at least one memory ROM 302a, at least one RAM 302b and other possible components 303 for use in software and hardware aided execution of tasks it is designed to perform, including control of access to and communications with access systems (such as a network access system provided by the network device described above in relation to Figures 1 and 2) and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as key pad 305, touch sensitive screen or pad, combinations thereof or the like. Optionally one or more of a display, a speaker and a microphone may be provided depending on the type of the device.

In some exemplary embodiments, the terminal 300 may be an apparatus comprising at least one processor and at least one memory storing instructions that, when executed by the at least one processor, cause a user device 110, 115 to perform examples or embodiments described in this document.

Several features have been introduced in 3GPP to reduce apparatus energy consumption and prolong battery life, particularly for user equipment.

One large contributor to the UE energy consumption relates to the monitoring of a downlink channel, such as a physical downlink control channel (PDCCH).

In order to reduce such downlink channel monitoring, a sequence-based wake-up signal (WUS) was introduced in 3GPP Release 15 for some machine-type communications, and expanded in Release 16 and beyond to include more types of UEs.

According to such systems, a UE can enter a reduced energy radio resource control (RRC) state (such as, for example, an IDLE mode), and monitor for receipt of a wake-up signal within at least one predetermined timing window. When no wake-up signal is received within a timing window, the UE maintains its reduced energy RRC state. When a wake-up signal is received during a timing window, the UE monitors for a corresponding paging occasion (PO) during a subsequent time instance in order to determine whether to change to a more active RRC state (such as an RRC ACTIVE mode). One example of a wake-up signal defined in Release 17 is known as a paging early indicator (PEI). It is understood that other types of signals may provide similar functionality as a wake-up signal. It is further understood that a mode in which a UE is considered to be receiving in an ACTIVE mode is known as a main radio (MR) mode, and a mode in which the UE is considered to be receiving in a reduced power mode is known as a low power radio (LR) mode. These two modes may utilise completely different receive apparatus. As another example, these two modes may utilise at least part of the same receive apparatus (e.g., an LR mode may be performed by only part of a receiver architecture used for receiving during the MR mode).

A potential new wake-up signal for Release 19 and beyond is known as a low power wake-up signal (LP-WUS). There are a variety of different areas to be developed in respect of defining such a LP-WUS, including the specification of a low power synchronisation signal (LP-SS), which may have a periodicity of transmission of Y ms for a low-power wake-up receiver (LP-WUR). The LP-SS will also be referred to herein as simply a wake-up signal synchronisation signal.

The main purpose of the WUS LP-SS is to serve as a timing reference for wakeup receivers. In addition, the LP-SS can be used by the wakeup receiver to perform approximated radio resource management measurements. Stated differently, an LP-SS may be used for synchronisation and/or for radio resource management for a serving cell.

Wake-up signals may be transmitted in a plurality of forms. Reference is made in the following to on-off keying (OOK) wake-up signals and orthogonal frequency division multiplex (OFDM)-based wake-up signals. These are illustrated further below.

For OFDM-based wake-up signals, the existing OFDM-based New Radio (NR) signal structure can be reused for transmitting wake-up signals with a minimum or no impact on the base station for the waveform generation. For example, the existing 5G Secondary Synchronization Signal (SSS) and other reference signals along with existing sequences, such as m-sequence and Zadoff-Chu sequence, can be reused for transmitting wake-up signals. Such sequences have good autocorrelation and cross-correlation properties, making it possible to perform correlation-based detection both in the time and frequency domain with a desirable detection performance.

For OOK-based wake-up signals, the on-off keying (OOK) waveform is a special form of amplitude-shift keying in which information is carried through a sequence of ON (e.g., high power level) and OFF (e.g., low power level) signals in alternating ON-OFF patterns (e.g., ON-OFF sequences, such as ON-OFF-ON-OFF-ON-OFF, or ON-ON-OFF-OFF-ON-ON-OFF-OFF, or ON-ON-OFF-ON-ON-OFF, or the like). An OOK waveform is attractive for low power and low complexity receivers as it can be detected with an envelope detector in the time domain without the need for power-hungry components such as an accurate oscillator and phase locked loop (PLL).

While the OOK wake-up signals provide power saving benefits for the WUR, it has less coverage compared to OFDM-based signals for the same resource overhead. Consequently, to reach a target coverage, the system overhead in terms of time-frequency resource consumption is higher than for an OFDM-based wake-up signals. Another consideration is that the OOK waveform needs to be generated using the existing base stations while ensuring efficient coexistence with existing OFDM-based transmissions.

The two main variants of the OOK waveform generated by an OFDM transmitter are: Single-bit OOK, and multi-bit OOK.

For single-bit OOK, within one OFDM symbol, only one ON/OFF OOK segment is transmitted. OOK WUS can be generated by transmitting one bit (0 or 1) per OFDM symbol. In this case, WUS subcarriers have non-zero power to generate a "1" bit, while a "0" bit is generated by having zero-power WUS subcarriers. Single-bit OOK generation of ON/OFF signal is straightforward with minimum impact on the OFDM transmitter.

For multi-bit OOK, multiple ON/OFF OOK segments are transmitted within one (e.g., within a single) OFDM symbol. Specifically, the OFDM transmitter may generate a time domain signal that is close to a desired OOK waveform.

In addition, a harmonized design based on both OOK and OFDM WUS can be considered where the signal can be received by OOK-based WUR and OFDM-based WUR. In this case, OFDM sequences can be additionally modulated on top of the OOK waveform to carry information and provide benefits for devices supporting OFDM-based WUR.

It is currently expected that an LP-SS will be based on on-off keying 1 (OOK-1) and/or on-off keying-4 (OOK-4) waveforms, with or without overlaid orthogonal frequency division multiplex (OFDM) sequences.

On-Off Keying (OOK) is a well-known modulation allowing for a low-power receiver implementation (e.g., envelope and/or energy detection. It is a special case of Amplitude Shift Keying (ASK) where there are only two amplitudes, ON and OFF. When applied to a multi-carrier system, such as OFDM, OOK is also referred to as multi-carrier (MC) OOK, because the ON and OFF signals typically span multiple sub-carriers. OOK-1 is a classical MC-OOK scheme, where M = 1 bit is transmitted per OFDM symbol. For OOK-4, coded bits per OFDM symbol are mapped to time domain sequences to produce a time-domain signal. Subsequently, the time-domain signal is transformed into frequency domain before being mapped onto an OFDM resource grid).

When a UE switches from using a main radio (MR) mode to using a low-power receiver (LR) mode, during the LR mode, the UE will wake up for detecting a LP-WUS only during predetermined WUS occasions. The UE may also occasionally also wake up from the low-power mode to receive the Low Power Synchronization Signal (LP-SS) to maintain timing alignment with the UEs serving cell. The LP-SS reception can also be used by the UE for performing radio resource management (RRM) measurements (e.g., signal to interference ratios, received signal power, etc.), and for determining that the UE is still within a coverage area in which the WUS can be received by the UE in the low-power receiver mode.

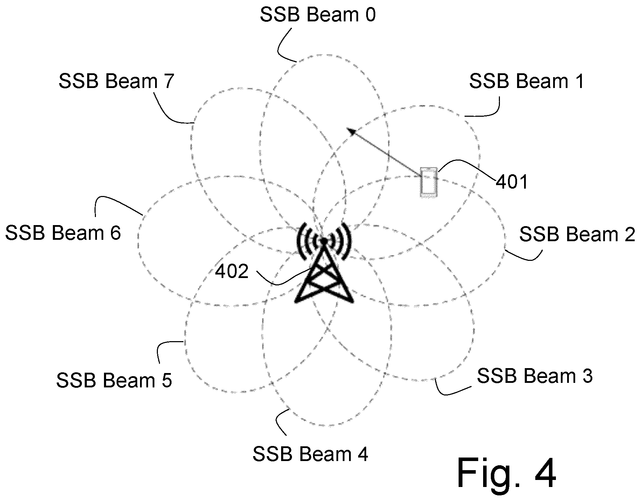

Figure 4 illustrates an example in which a UE 401 is moving within a coverage area provided by a network access node 402. As shown in Figure 4, the network access node 402 is configured to provide eight synchronisation signal block (SSB) beams, SSB beams, corresponding to respective coverage areas (SSB beam 0 to SSB beam 7), each of which being associated with a respective LP-SS sequence. An SSB beam may be considered as a beam used for broadcasting SSBs, or otherwise be considered as being a beam for providing information for synchronising a UE to a network access node, such as a gNB. A synchronisation signal block is a cell-specific signal transmitted by a network access node with a known sequence that can be measured by a calibrated measuring receiver. In current 3GPP specifications, each SSB occupies 240 subcarriers in the frequency domain, and 4 symbols in the time domain. If SSB beamforming is enabled, each SSB is transmitted on different spatial beams.

As shown in the example of Figure 4, the UE may move between the SSB beams broadcasted by the network access node, and the UE will therefore have to change the SSB beam being tracked by the UE in order to obtain the strongest (e.g., "best") SSB beam.

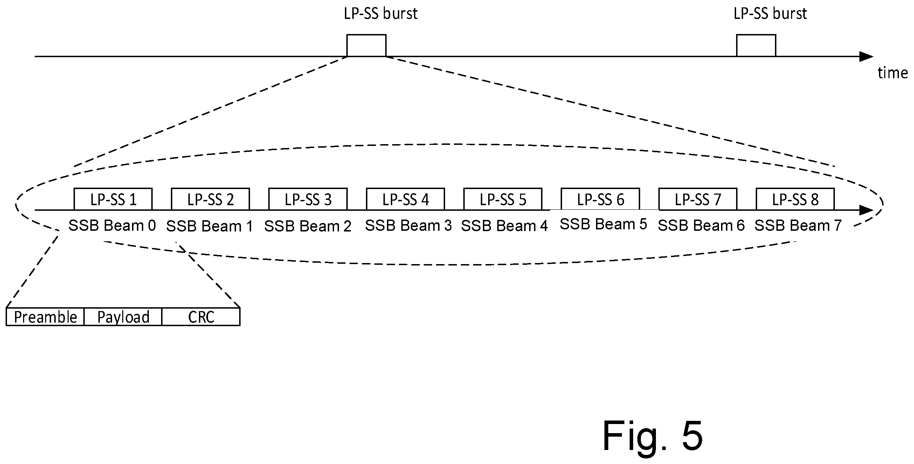

The LP-SS is assumed to be broadcasted pseudo-omnidirectional (e.g., on all SSB beams). The LP-SS from different SSB beam directions are assumed to be broadcasted time multiplexed on the same carrier frequency, such that the LR does not have to switch frequency in between. Therefore, in order to perform beam tracking of the LP-SS, the UE needs to evaluate the power of the LP-SS from different beam directions by receiving multiple LP-SS occasions originating from different LP-SS beam directions. This is illustrated with respect to Figure 5 for the example of Figure 4.

Figure 5 illustrates a periodicity of LP-SS bursts 501. Each burst comprises eight different LP-SSs, corresponding to SSB beams 0 to 8. Each LP-SS comprises a respective preamble, payload, and cyclic redundancy check (CRC) fields.

In the MR mode, tracking the best SSB beam is performed by performing consecutive receptions of the SSB block(s). Such consecutive reception may be power consuming. In particular, even when a UE only needs to receive the strongest LP-SS, then the UE will still have to monitor the LP-SS occasions regularly to observe if there is a stronger LP-SS occasion. In the best case, the LP-SS occasions are next to each other in time, and the UE does not need to wake up multiple times to do the monitoring. However, even in this best case scenario, the UE is still in a receiving mode for longer than simply the duration of the LP-SS occasion of the serving beam.

The following aims to address at least one of the above-mentioned issues.

In particular, the following proposes to configure the LP-SS signal for a specific SSB beam such that it comprises at least part of an LP-SS signal corresponding to another SSB beam.

For example, considering the case when a UE receives an LP-SS corresponding to a serving beam (where a serving beam may be considered as a beam that the UE is currently considering as the best beam and which the is using for at least one of automatic gain control (AGC), RRM measurements, or timing tracking of the network access node providing the beam(s)), the LP-SS signal corresponding to that serving beam may be formed such that a part of the LP-SS signal originates from other beams of the network access node than the serving beam. Moreover, the amount of transmissions made by the serving beam in the LP-SS may be greater than transmissions made by one or more (including all) of the other beams of the network access node within the LP-SS.

The simple OOK modulation scheme allows the receiver to perform symbol detection on the superimposed signal without any channel equalization (it does not require coherent detection) but may simply rely on detection of power difference between the ON symbols and OFF symbols in the Manchester encoded signal.

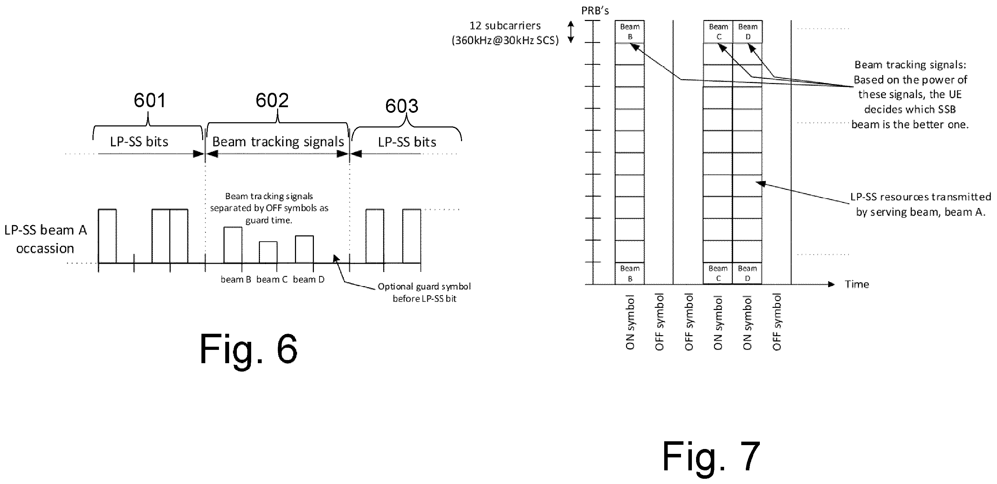

The following examples of Figures 6 to 8 illustrate examples in which a current LP-SS signal corresponding to a current serving beam is transmitted with at least part of another LP-SS signal corresponding to another beam. The UE may use the power of the received signals to estimate the corresponding power of the associated SSB beams. This may be used by the UE to make decisions, such as whether to switch from the current LP-SS signal to the another beam LP-SS signal, and/or for selecting a "best" SSB beam index when transitioning from the LR mode to the MR mode.

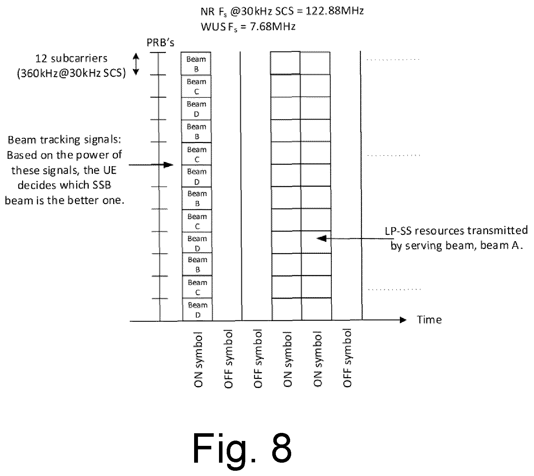

In particular, the example of Figure 6 illustrates an example in which the beam tracking signals are acquired from a time domain representation of the ON symbols signal of the MC-OOK modulated LP-SS signal, while the examples of Figures 7 and 8 illustrate examples in which the beam tracking signals are acquired from a frequency domain representation of the ON symbols of the MC-OOK modulated LP-SS signal.

These are described in more detail below.

As mentioned above, Figure 6 illustrates an example in which the beam tracking signals are acquired from a time domain representation of the ON symbols signal of the MC-OOK modulated LP-SS signal. This example may be applied in respect of both sequence-based receivers (that is, receivers that sample a signal and correlate samples with a transmitted sequence in the time or frequency domain) and envelope detection- (ED-) based receivers (that is, receivers that detect a signal envelope and signal energy).

In more detail, Figure 6 illustrates transmissions made in a first transmission occasions for a serving LP-SS beam of the serving beam. Figure 6 illustrates a first part 601 that comprises bits corresponding to only the serving LP-SS, a second part 602 that comprises bits that respectively correspond to other beams than the serving beam, and a third part 603 that comprises bits corresponding to only the serving LP-SS. It is understood that this is merely an example, and that other configurations in time are possible. For example, the signal of Figure 6 may comprise only the first and second parts (and not the third part) in any order. Positioning the beam tracking signals at an end of signal of Figure 6 may be useful for, for example, influencing AGC and/or filtering of the other part of the LP-SS signal.

In this example of Figure 6, it is assumed that certain consecutive MC-OOK symbols are reserved for symbols transmitted from other SSB beams. Stated differently, in the example of Figure 6, the entire LP-SS frequency bandwidth is occupied by the beam tracking signal. Figure 6 therefore illustrates how beam tracking signals may be time multiplexed inside a serving LP-SS signal.

During the second part 602, each non-serving SSB beam transmits a signal that is used by the LR to track the power of that beam relative to the power of the other beams. These beam tracking signals may be placed in adjacent ON symbols, such that the ON symbols are separated by an OFF symbol in between. The resulting sequence may therefore appear to be an alternating sequence of ON and OFF symbols after Manchester encoding, which will allow the OFF symbols to act as a guard time between the ON symbols. By configuring the transmissions such that at least one OFF symbol between ON symbols can act as a guard time, the ON symbols do not interfere with each other (e.g., due to different propagation delay).

In this example of Figure 6, the LR mode UE can sample the signal and calculate the power in each ON symbol inside the beam tracking signals. This sampled power may be used by the LR mode UE for estimating which SSB beam has the strongest power out of the measured LR modes. The LR mode does not need to obtain absolute power levels for these measured beam tracking signals, as an evaluation to determine which beam is best may be determined based on a relative power estimate.

The signal power in the OFF part of the (e.g., Manchester encoded) OOK symbol can be used to evaluate a noise contribution associated with a received ON symbol. Stated differently, a power measured during an OFF symbol may be used for determining how noisy the power estimate in the ON symbol has been. When there is a low signal-to-noise ratio (SNR), then the UE may decide to obtain an average power estimate across multiple LP-SS receptions. In such a case, the average power estimate may be used to determine SNR, and/or to make RRM decisions.

At least one of the beam tracking signals received may exhibit different channel fading conditions to another of the received beam tracking signals. The UE may mitigate against such channel fading by adopting a kind of diversity scheme. This diversity scheme may comprise, for example, toggling the UE's receive antenna between each LP-SS reception, and/or causing the access network node to transmit the LP-SS concurrently on two different polarizations on the access network node's transmit antenna.

This time domain approach of Figure 7 is not sensitive to frequency offset as the power is distributed across the entire WUS signal bandwidth of 4.32MHz (using current specification definitions). Therefore, even if the signal is offset by 100kHz, this would only result in the cutoff frequency of the receive filter cutting a small fraction of the LP-SS signal so the impact on the total power would neglectable. Moreover, even if some power is cut off by the receive filter, it will happen to all the beam specific receptions and therefore the relative power is still comparable between the beam receptions.

Figures 7 and 8 illustrate another example in which beam power is detected in the frequency domain. This may be deployed by, for example, sequence-based receivers.

In these examples, it is assumed that certain subcarriers inside the LP-SS bandwidth (e.g., frequency domain resources corresponding to the LP-SS bandwidth) of a serving SSB beam are reserved for the beam tracking signals corresponding to non-serving SSB beams. Stated differently, a non-serving SSB beam may transmit a signal using frequency domain resources corresponding to a serving SSB beam. This is illustrated with respect to Figure 7.

Figure 7 illustrates ON and OFF symbol time resources along the x-axis, and frequency resources (in the form of physical resource blocks, PRBs) along the y-axis.

The frequency resources of Figure 7 are split into 12 subcarriers having a same width. The first and last frequency resource in each ON symbol are reserved for use by the non-serving beams.

For example, the first ON symbol in Figure 7 is illustrated as comprising beam tracking signal transmissions corresponding to a first non-serving beam in the first and twelfth physical resource blocks and LP-SS transmissions corresponding to the serving beam in the second to eleventh subcarriers.

Purely for illustration, the example of Figure 7 uses parameter settings from 3GPP TS 38.869 regarding signal bandwidth, SCS and LR mode sampling rate. The WUS signal bandwidth in this example is 4.32MHz and the SCS is 30kHz corresponding to 12 Physical Resource Blocks (PRBs) (144 subcarriers) inside the WUS bandwidth. In the illustration, it is assumed that each beam tracking signal is constructed to occupy one PRB.

Further, the second ON symbol in Figure 7 is illustrated as comprising beam tracking signal transmissions corresponding to a second non-serving beam in the first and twelfth physical resource blocks and LP-SS transmissions corresponding to the serving beam in the second to eleventh subcarriers.

Further, the third ON symbol in Figure 7 is illustrated as comprising beam tracking signal transmissions corresponding to a third non-serving beam in the first and twelfth physical resource blocks and LP-SS transmissions corresponding to the serving beam in the second to eleventh subcarriers.

The beam tracking signals may, for example, be located at any configured PRB in an OFDM symbol. For example, the beam tracking signals may be located on opposing ends of the PRBs of an OFDM (as per Figure 7), the beam tracking signals may be located in more central PRBs of an OFDM, and/or the beam tracking signals may be located at a single end of an OFDM (e.g., the first and second PRBs in an OFDM).

At least part of the beam tracking signal may be zero (e.g., comprise no data) on the sub-carriers closest to the serving beam part in order to function as a guard band between the beam tracking signal and the LP-SS transmissions. This may allow for a frequency offset in the LR mode receiver (e.g., the LR mode receiver may not be accurately tuned to the beam frequency, and may differ from the beam frequency by the frequency offset) to be tolerated without significant negative impact on the relative signal strength estimated for each beam.

Stated differently, it may be advantageous to configure the signalling to comprise some unused subcarriers around the resources used for the beam tracking signals of the LP-SS such that the UE can separate the beam tracking signal the rest of the LP-SS (or from beam tracking signals from other beams) even when there are some frequency errors in the reception. The zero subcarriers may allow the network access node to increase the power on the other subcarriers such that the average energy-per-resource element (EPRE) is still met. The network access node may also power boost the transmission power of the LP-SS signal to compensate for the PRBs used for the beam tracking signals.

Transmitting the beam tracking signals at both ends of the LP-SS bandwidth may help to reduce impact of channel fading by, for example, selecting a stronger frequency bin or by averaging the power received in both frequency bins. Alternatively, instead of transmitting in both ends of the LP-SS signal bandwidth, the network access node may transmit in alternating sides of the LP-SS signal when repeating the transmission on a specific beam (e.g., so that a first transmission has beam tracking signals at a first end of the ON symbol (e.g., first and second PRBs), while a second transmission has beam tracking signals at a second end of the ON symbol (e.g., at eleventh and twelfth PRBs).

Figure 8 illustrates another example in which beam tracking signals are distributed in the frequency domain.

In the example of Figure 8, the first ON symbol comprises only beam tracking signals (e.g., the first, fourth, seventh, and tenth PRBs are used for a first beam tracking signal, the second, fifth, eighth, and eleventh PRBs are used for a second beam tracking signal, and the third, sixth, ninth, and twelfth PRBs are used for a third beam tracking signal). Further, the second and third ON symbols comprise LP-SS signalling for the serving beam.

In this example of Figure 8, the beam tracking signals are distributed across multiple separated frequency bins (e.g., across multiple separated frequency sub carriers), which makes this signalling more robust against channel variations. Further, multiple beam tracking signals are illustrated as being frequency multiplexed in the same ON symbol. With this mapping, the complete ON symbol is allocated for the beam tracking signals and they therefore do not have an impact on the LP-SS signal itself.

These frequency domain examples of Figures 7 and 8 are more sensitive to frequency error that the time domain examples of Figures 6 as the beam specific power is constrained to fewer subcarriers. However, 12 subcarriers span 360kHz, so minor frequency offsets will not have a major impact.

In all of the above examples of Figures 6 to 8, the beam tracking signals may be ignored and/or removed before processing the LP-SS signal when the LP-comprises CRC check bits. Since the network access node does not know the level of beam tracking signals at the UE, the access network node cannot know if the UE will interpret the signal as an ON or OFF symbol, and therefore those signals are not included in the CRC calculation.

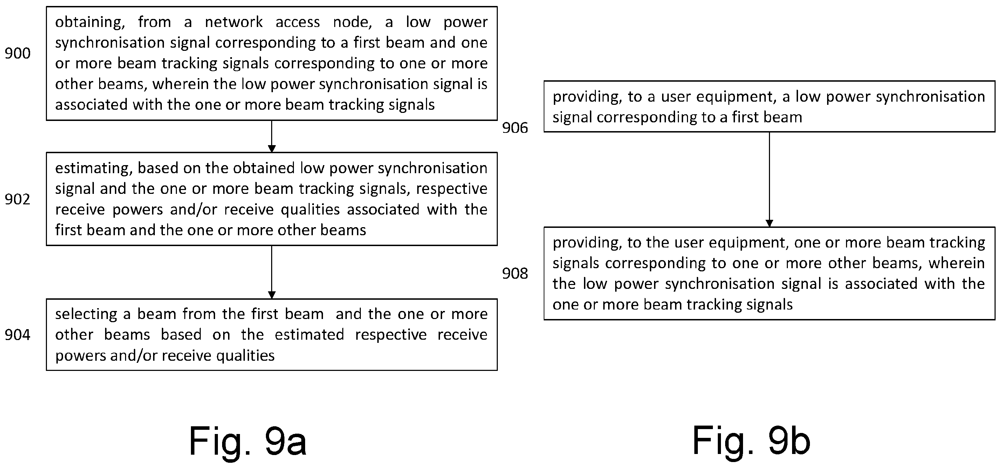

Reference is made to Figure 9a, which shows a method according to some examples. In particular, Figure 9a shows a method that may be performed by a UE.

With reference to Figure 9a, at 900 the method comprises obtaining, from a network access node, a low power synchronisation signal corresponding to a first beam and one or more beam tracking signals corresponding to one or more other beams, wherein the low power synchronisation signal is associated with the one or more beam tracking signals.

At 902 the method comprises estimating, based on the obtained low power synchronisation signal and the one or more beam tracking signals, respective receive powers and/or receive qualities associated with the first beam and the one or more other beams. For example, receive power may refer to low power reference signal received power (LP-RSRP), which may be associated with LP-SS. The LP-RSRP may correspond to the receive power of the LP-SS. Receive quality may refer to low power reference signal received quality (LP-RSRQ), which may be associated with the LP-SS. LP-RSRQ may correspond to the receive quality of the LP-SS. LP-RSRQ may also be associated with signal to noise ratio (SNR).

At 904 the method comprises selecting a beam from the first beam and the one or more other beams based on the estimated respective receive powers and/or receive qualities.

Reference is made to Figure 9b, which shows another method according to some examples. In particular, Figure 9b shows a method that may be performed by a network access node.

With reference to Figure 9b, at 906 the method comprises providing, to a user equipment, a low power synchronisation signal corresponding to a first beam.

At 908, the method comprises providing, to the user equipment, one or more beam tracking signals corresponding to one or more other beams, wherein the low power synchronisation signal is associated with the one or more beam tracking signals.

The presently described methods may be associated with a plurality of different advantages.

For example, the presently described methods offer a power efficient method that avoids the power consuming beam tracking methods used for normal SSB reception by the main receiver (MR). Stated differently, the presently described methods do not need to receive entire LP-SS signals from each SSB beam.

Further, the beam tracking signals of LP-SS allow the UE to frequently track and select the best SSB beam to use without having to receive all LP-SS beam occasions.

The frequency-based methods may be used by UEs that are sampling the signal and supports signal processing. The processing may involve fast Fourier transform, but it can also be a time domain correlation which is simpler and more efficient to support in the LR mode. This involves additional power consumption, but this additional power consumption is likely saved by the benefit of acquiring the beam tracking signals allowing the UE to reduce the occurrence of full LP-SS signal reception from non-serving SSB beams.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
(c) a combination of analog and/or digital hardware circuit(s) with software/firmware and
(d) any portions of hardware processor(s) with software (including digital signal processor(s)), software, and memory(ies) that work together to cause an apparatus, such as a mobile phone or server, to perform various functions) and
(e) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal ) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

## Claims

1. An apparatus for a user equipment (110), the apparatus comprising means for:
obtaining, from a network access node (120), a low power synchronisation signal corresponding to a first beam and one or more beam tracking signals corresponding to one or more other beams, wherein the low power synchronisation signal is associated with the one or more beam tracking signals;
estimating, based on the obtained low power synchronisation signal and the one or more beam tracking signals, respective receive powers and/or receive qualities associated with the first beam and the one or more other beams;
selecting a beam from the first beam and the one or more other beams based on the estimated respective receive powers and/or receive qualities.

2. An apparatus as claimed in claim 1, further comprising means for at least one of:
performing, on the selected beam, at least one of receiver gain control, radio resource management measurement, and timing tracking to the network access node; and
providing an indication of the selected beam to the network access node.

3. An apparatus as claimed in claim 1 or 2, wherein the means for selecting a beam comprises at least one of the following:
means for selecting the beam that corresponds to the highest receive power of the respective receive powers or corresponds to the highest receive quality of the respective receive qualities;
means for:
determining respective signal to noise ratio for each of the one or more other beams; and
averaging the receive powers across a set of beam tracking signal receptions of a respective other beam when the respective signal to noise ratio for the respective other beam is below a threshold; or
means for selecting the beam from the first beam and the one or more other beams based on a relative power estimation.

4. An apparatus as claimed in any preceding claim, wherein the apparatus comprises a low power radio mode and a main radio mode, and further comprises means for performing: using the low power synchronisation signal and the beam tracking signals for assisting a transition from the low power radio mode to the main radio mode.

5. An apparatus as claimed in claim 4, wherein:
the selecting comprises selecting a synchronisation signal block index based on the estimated receive powers and/or receive qualities of the low power synchronisation signal and the beam tracking signals; and wherein the apparatus further comprises means for:
switching to the beam associated with the selected synchronisation signal block index in the main radio mode.

6. An apparatus as claimed in any preceding claim, further comprising means for determining the beam tracking signals from a time domain representation of the low power synchronisation signal, wherein beam tracking signal corresponding to each beam is comprised in a respective on-segment of an on-off keying pattern, and preferably further comprising means for determining the beam tracking signal from a frequency domain representation of the low power synchronisation signal, wherein beam tracking signal corresponding to each beam is further comprised in a same frequency range of different on-segments of the on-off keying pattern.

7. An apparatus as claimed in any of claims 1 to 5, further comprising means for determining the beam tracking signals from a frequency domain representation of the low power synchronisation signal, wherein beam tracking signal corresponding to each beam is comprised in a respective frequency range.

8. An apparatus as claimed in claim 7, further comprising means for determining the beam tracking signals at border frequency carrier of the frequency domain representation of the low power synchronisation signal, or determining the beam tracking signals at multiple frequency carriers of the frequency domain representation of the low power synchronisation signal, wherein the multiple frequency carriers occupy a same symbol.

9. An apparatus (200) for a network access node (120), the apparatus comprising means for:
providing, to a user equipment (110), a low power synchronisation signal corresponding to a first beam; and
providing, to the user equipment, one or more beam tracking signals corresponding to one or more other beams, wherein the low power synchronisation signal is associated with the one or more beam tracking signals.

10. An apparatus as claimed in any preceding claim, wherein the network access node comprises at least one of an eNB, gNB and/or NodeB.

11. An apparatus as claimed in any preceding claim, wherein the low power synchronisation signal and the beam tracking signals are modulated onto a waveform having alternating on-off keying segments.

12. An apparatus as claimed in claim 11, wherein said waveform comprises an on-off-keying 1 form and/or an on-off keying 4 form.

13. An apparatus as claimed in any of claims 11 to 12, wherein there is an on-off transition within at least two symbols of the low power synchronisation signal and/or the beam tracking signals based on a Manchester encoding scheme.

14. A method performed by a user equipment (110), the method comprising:
obtaining (900), from a network access node, a low power synchronisation signal corresponding to a first beam and one or more beam tracking signals corresponding to one or more other beams, wherein the low power synchronisation signal is associated with the one or more beam tracking signals;
estimating (902), based on the obtained low power synchronisation signal and the one or more beam tracking signals, respective receive powers and/or receive qualities associated with the first beam and the one or more other beams; and
selecting (904) a beam from the first beam and the one or more other beams based on the estimated respective receive powers and/or receive qualities.

15. A method performed by a network access node (120), the method comprising:
providing (906), to a user equipment, a low power synchronisation signal corresponding to a first beam; and
providing (908), to the user equipment, one or more beam tracking signals corresponding to one or more other beams, wherein the low power synchronisation signal is associated with the one or more beam tracking signals.
